# EUROPEAN PATENT SPECIFICATION

(11) **EP 1 551 617 B1**
(45) Date of publication and mention of the grant of the patent: **18.07.2007**
(21) Application number: 03794387.5
(22) Date of filing: 01.09.2003
(51) Int. Cl.: B29C 70/44, B29C 63/20

(54) **HOLDING DEVICE FOR AN ITEM AND A METHOD FOR HARDENING TOGETHER SAID ITEM**
HALTEVORRICHTUNG FÜR EINEN GEGENSTAND UND VERFAHREN ZUM ZUSAMMENHÄRTEN DES GEGENSTANDS
DISPOSITIF DE RETENUE D'UN ARTICLE ET PROCEDE POUR FAIRE DURCIR LEDIT ARTICLE

(30) Priority: 05.09.2002 SE 0202624
(43) Date of publication of application: 13.07.2005
(73) Proprietor: SAAB AB, 581 88 Linköping (SE)
(72) Inventor: WESTERDAHL, Anders, S-582 29 Linköping (SE)
(74) Representative: Holmberg, Magnus
(86) International application number: PCT/SE2003/001354
(87) International publication number: WO 2004/022321

(56) References cited:
- EP-A2- 0 318 867
- SE-C2- 519 268
- US-A- 5 403 537
- US-A- 5 597 435
- US-A- 5 993 184

## Description

### BACKGROUND OF THE INVENTION AND PRIOR ART

This invention concerns a holding device according to the preamble to Claim 1 for holding an item in connection with hardening of the item.

The invention also encompasses a method for hardening together an item according to the preamble to Claim 7.

The fabrication of many items and structural elements, such as vehicles, vessels and aircraft, out of sheet metal or hardenable composite materials containing fibers, such as glass fibers or carbon fibers, is known. Such composite materials are distinguished by high strength and relatively low weight. These distinguishing properties have resulted in it becoming increasingly common in the aviation industry to use items containing composite materials. One often used type of item comprises a cell core and a beam frame which surrounds the cell core and consists of glued carbon fiber beams. The cell core, which is relatively pliant, must be glued at a low pressure, typically 180 kPa. On the other hand, a high pressure, typically 300 - 600 kPa, is prescribed when gluing the beams to the frame in order to produce a good glue joint.

The above-described item type thus requires that the beams first be glued together at the higher pressure, and that the cell core then be glued at the lower pressure. A tool that can be used when hardening items of this type is described in WO 01/47695.

Other holding devices used in composite moulding are known from US-A-5 993 184 and US-A-5 597 435.

### PURPOSE OF THE INVENTION

One purpose of the invention is to reduce the costs and lead times associated with the assembly of said items and other items wherein the parts involved require hardening at different pressures.

### SUMMARY OF THE INVENTION

This purpose has been achieved according to the invention by means of a holder for holding an item in connection with the hardening of same in a pressure tank that has a pressure that is elevated in relation to the atmospheric pressure. The holding device comprises one or more support elements that entirely or partly surround the lateral surfaces of the item and are arranged so as to support the item during hardening, and to exert a differentiated pressure on the item.

At least one of the support elements is arranged in relation to the item in such a way that the support element exerts, along its length, different levels of pressure on the item in that, in a first region along its length, the support element presses against the item with a pressure that is elevated relative to the pressure-tank pressure and, in a second region along its length, presses against the item with a pressure that is lower relative to the pressure tank pressure. The support element that exerts, along its length, different levels of pressure on the item can be fixedly arranged in the holding device with a pivot point chosen so that the support element exerts the elevated pressure in the first region and the lower pressure in the second region. The support elements that do not exert different levels of pressure on the item lie in abutment with the item along their entire length essentially without pressing against the item.

In a special embodiment the holding device is arranged so as to hold an item comprising a core and a beam frame that surrounds the lateral surfaces of a core and includes at least two beams for gluing of the core to the beam frame and gluing of the beams to one another. The support elements are then arranged so as to exert the differentiated pressure so that they press the beams toward one another at the elevated pressure relative to the pressure-tank pressure, and lie in abutment to the item essentially without exerting any pressure thereon where the core is to be glued to the beam frame. The elevated pressure pressing the beams toward one another is, e.g. roughly 2 - 4 times higher than the prevailing pressure in the pressure tank.

The invention also concerns a method for hardening together an item containing at least a core and a beam frame surrounding a core and including at least two beams whereby the core is glued to the beam frame and the beams of the beam frame are glued to one another. The method is characterized in that the unhardened item is arranged on a underlayer, that support elements are applied around the item to hold it together, that the support elements are caused to exert a differentiated pressure on the item, and that the unhardened item, on its underlayer and with the support elements, is introduced into a pressure tank for hardening. The support elements are caused to exert a pressure that is elevated relative to the pressure-tank pressure on the surfaces that press the beams together toward one another and lie in abutment to the item essentially without exerting pressure on the surfaces where the beams are glued to the core.

The holding device and method for hardening together an item according to the invention make it substantially easier to glue together an item comprising a core glued on a beam frame of beams that are glued together. The core is pressure-sensitive, and can tolerate a very low pressure laterally, while it can withstand a pressure of on the order of 180 kPa from above. A significantly higher pressure, on the order of 300 - 600 kPa, is consequently prescribed for gluing together the beams, in order to obtain a good glue joint. Despite these contradictory requirements, the device and method according to the invention enable gluing of the item in a single step. The pressure in the pressure tank, which is thus on the order of a maximum of 180 kPa, presses from above against the beam frame and the core. The support means arranged around the item resist the pressure which would otherwise be exerted on the item laterally, except for on those surfaces where the pressure that is elevated relative to the pressure-tank pressure is prescribed. The support means exert the prescribed pressure on these surfaces. In the holding device and method according to the invention, the pressure-tank pressure is thus used to create a differentiated pressure on the item.

### BRIEF DESCRIPTION OF THE FIGURES

- Figure 1: shows an example of a holding device for holding an item in connection with hardening of same;
- Figure 2: shows an exemplary embodiment of the item in Figure 1;
- Figure 3: provides a schematic diagram of an example of the item in Figure 2 mounted in a holding device containing support elements.

### PREFERRED EMBODIMENTS

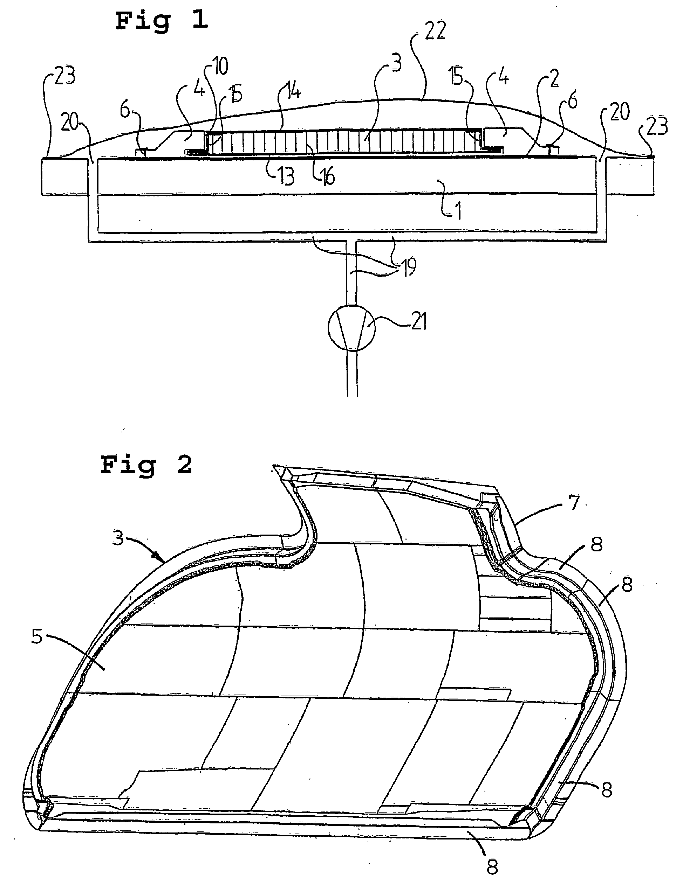

In Figure 1 a holding device contains a base element 1 which, in the example shown, forms a bed with an upper bed support that has a size of, e.g. 10m². The base element 1 can be made of steel or another metal or metal alloy, such as aluminum, nickel, etc., and has a thickness of between 5 and 50mm, e.g. between 20 and 25mm.

An intermediate element 2 is displaceably arranged on the bed surface of the base element 1, i.e. the intermediate element 2 rests loosely on the base element 1. An item to be fabricated is placed on top of the intermediate element 2. The intermediate element 2 forms a shaping element for the item 3, i.e. the intermediate element 2 forms a surface that has a shape that corresponds to a surface of the item 3 to be fabricated that is faces in opposition to the surface of the intermediate element. In the example shown, the intermediate element 2 is relatively thin in comparison with the base element 1, and can measure from 2 to 7mm, e.g. between 4 and 5mm. The intermediate element 2 can advantageously have an upper surface that is essentially parallel with a lower surface of the intermediate element. The upper bed surface of the base element 1 will then advantageously also have a shape that corresponds to the shape of a surface of the item 3 to be fabricated. The intermediate element 2 alternatively has an upper surface on which the item 3 to be fabricated rests, and a lower surface, whereupon these surfaces are not parallel. For example, the upper surface can have a concave shape while the lower surface is flat. In the embodiment shown in Figure 1, the upper and lower surfaces of the intermediate element are essentially flat, as is also the upper surface of the base element 1.

The intermediate element 2 is made at least partly of a composite material containing, e.g. fibers and a plastic material. Such fibers can consist of, e.g. carbon fibers, glass fibers and/or other mineral fibers. The plastic material contains a hardenable plastic, such as epoxy plastic.

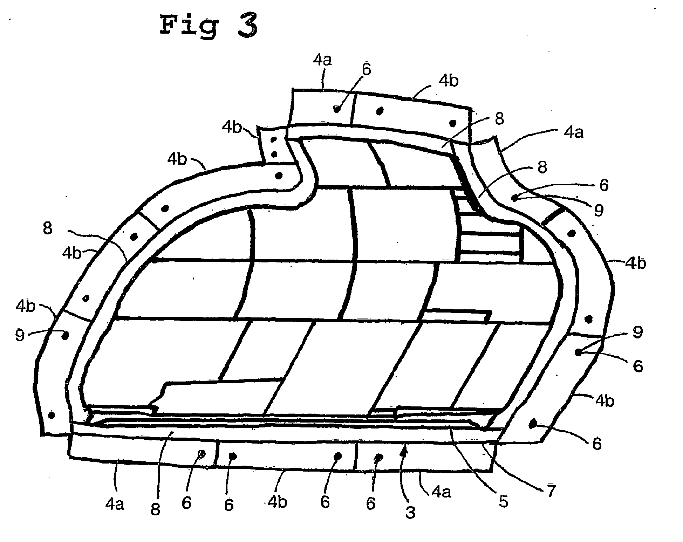

The holding device also includes support elements 4 that are fixable on the intermediate element 2. The support elements 4 together form a frame that supports the item 3 to be fabricated. The inner surface of the frame is thus defined by the contour of the peripheral surface of the item. The support elements 4 are fixable on the intermediate element 2 by means of connecting elements 6. The support elements 4 are thus secured only to the intermediate element 2. The connecting elements 6 comprise, e.g. a bolted joint with a bolt and a nut that is threaded on the bolt. The bolt extends through the intermediate element 2 and one of the support elements 4, and includes a bolt head that is countersunk into the intermediate element 2. Other connecting elements are also possible within the scope of the invention, e.g. a single non-threaded bolt that extends through a hole in the intermediate element 2 and one of the support elements 4 with a suitable fit. It is also possible to fasten one or several of the support elements 4 to the intermediate element 2 by means of a more permanent joint, e.g. by gluing. Each support element 4 has a support surface 10 that is turned toward the peripheral surface of the item 3 to be fabricated. The support surface 10 thus has a contour that corresponds to the peripheral contour of the item 3 to be fabricated. The mounting of the support elements 4 will be described in greater detail in connection with Figure 3.

The support elements 4 can also be made of a composite material containing fibers and a plastic material. The fibers can consist of, e.g. carbon fibers, glass fibers and/or several mineral fibers, and the plastic material can contain epoxy resin. The support elements 4 advantageously contain a higher proportion of plastic material than the intermediate element 2. The support elements 4 are suitably made using dies made of metal, such as aluminum or steel.

The holding device further contains means for carrying gas away from a region above the base element 1. These means comprise ducts 19, which have an opening 20 in the upper bed surface of the base element 1, and which extend to a pump 21. There is also an essentially leaktight cloth 22 above the upper bed surface of the base element 1. The cloth 22 is fastened along the periphery of the base element 1 using some fastening means 23, such as, e.g. adhesive tape. The cloth 22 thus covers the openings 20, the intermediate element 2, the support elements 4 and the item 3 to be fabricated. When the pump 21 is started, the gas that is present between the cloth 22 and the base element 1 will be carried away and a vacuum will be created, whereupon the cloth 22 will seal tight onto the item 3 to be fabricated. It should be noted that additional elements can be arranged between the item 3 and the cloth 22; for example, a perforated plastic film (not shown) can be placed nearest the item 3, and a so-called tear-away cloth (not shown) can be placed between the item 3 and the cloth 22. In one embodiment, the holding device with its associated item 3 can be put into an autoclave for heat treatment.

In Figure 2 the item 3 consists of a structural element for an airplane, a vehicle, a boat, a vessel or some other device, such as a machine or a building. The item in Figure 2 contains a core 5 and a beam frame 7 surrounding the core and consisting of carbon fiber beams 8 that have been glued together. To achieve a strong glue joint between the beams, the glue must be hardened under relatively high pressure, i.e. on the order of 300 - 600 kPa.

The core 5 is glued into the beam frame 7. The core characteristically has a cellular structure, such as a honeycomb structure, whereby the weight of the item 3 can be kept at a low level. The core is characteristically pressure-sensitive. In an example with a phenol matrix/aramid fiber core, the core can tolerate an extremely low pressure laterally. The core can withstand exposure to a pressure on the order of 180 kPa from above.

In Figure 3 the support elements 4a, 4b surround the item 3 entirely. The support elements 4b that lie in abutment with a section of the beam frame 7 that lies adjacent to the core along its entire opposing peripheral surface are fixated in the intermediate element 2 by means of two connecting elements 6, described above, which are arranged at a distance from one another. The support elements 4b are fixated in relation to the item in such a way that, before hardening, they lie in firm abutment against the item 3 without exerting any pressure on the item. However, during the actual hardening process it can happen that a degree of pressure will be exerted on the item by the support elements 4b because the glue between the core and the beam frame expands somewhat during the hardening process. The support elements 4b that lie in abutment with a section of the beam frame 7, which encompasses a joint between two beams 8 are, in the same way, fixated in the underlayer by means of two connecting elements 6 that are arranged at a distance from one another. The support elements 4a that lie in abutment with a section of a beam 8 which, along its opposing peripheral surface, is adjacent to both the core and an opposing beam 8, is arranged in the intermediate element 2 in an alternative manner. These support elements 4a are mounted in the underlayer by means of just a single connecting element 6. This single connecting element 6 acts in this case as a pivot point 9 around which the support element 4a is somewhat rotatable. The position of the pivot point 9 is chosen in accordance with the torque calculations of one skilled in the art so that the support element 4a presses, in a region along its length where the beam adjacent to the support element butts against the opposing beam, the adjacent beam against the opposing beam and, along the remainder of its length, butts against the adjacent beam without pressing on it. For the above-described example with a phenol matrix/aramid fiber core and a pressure-tank pressure of 180 kPa, the pivot point is chosen so that the pressure that is exerted on the aforementioned region is on the order of 2 - 5 times higher than the air pressure in the pressure tank.

The fabrication of the item 3 can proceed in, e.g. the following manner. The intermediate element 2 is placed on the base element 1. The core is then placed on the intermediate element 2. The unhardened carbon fiber beams are also placed around the periphery of the core. The support elements 4 are then applied around the core 5 and the beam frame 7 of the carbon fiber beams 8 in the manner described in connection with Figure 3. The leaktight cloth 22 is then applied on top of the item and fastened using some fastening means 23 onto the upper bed surface along the periphery of the base element. The holding device is then introduced into an autoclave. The space that is created beneath the cloth is now vacuum suctioned by means of the pump 21 so that the cloth forms a tight seal onto the item. The temperature and pressure in the autoclave are gradually increased. The final levels to achieve hardening of the item 3 can be, e.g. roughly 2 - 6 bars, e.g. 6 bars absolute pressure, and 150 - 200°C, e.g. roughly 180°. After a suitable period of time in the autoclave, e.g. 2 - 3 hours depending on the size of the item, the pressure and temperature in the autoclave are lowered and the holding device can be taken out of the autoclave. The cloth 22 is then removed to expose the item 3. The item 3 is then removed from the holding device and is ready for mounting of after-treatment.

The invention is not limited to the embodiments shown, but can be varied and modified within the framework of the claims that follow. It should be noted in particular that the items 3 that can be fabricated using the holding device can, in principle, be of any arbitrary shape, and are in no way limited to the shape presented in the specification and in the drawings.

## Claims

1. A holding device for holding an item (3) in connection with hardening of the item under elevated pressure in a pressure tank, wherein the holding device includes one or more support elements that entirely or partly surround the lateral surfaces of the item and are arranged to support the item (3) during hardening, **characterized in that** at least one of the support elements (4a) is arranged in relation to the item in such a way that the support element (4a) presses, in a first region along its length, against the item with a pressure that is elevated relative to the pressure-tank pressure and, in a second region along its length, presses against the item with a pressure that is lower relative to the pressure-tank pressure.

2. A holding device according to Claim 1, **characterized in that** the at least one of the support elements (4a) in the second region lies in abutment with the item essentially without exerting any pressure on the item.

3. A holding device according to Claim 1, **characterized in that** the at least one of the support elements (4a) is fixedly arranged in the holding device at a pivot point (9).

4. A holding device according to Claim 1, **characterized in that** the at least one of the support elements (4a) that is arranged along its length to exert different levels of pressure against the item is arranged in abutment with at least one of the corners of the item.

5. A holding device according to Claim 1, **characterized in that** it is arranged to hold an item (3) containing a core (5) and a beam frame (7) surrounding a core and including at least two beams (8) for gluing the core (5) to the beam frame (7) and gluing the beams to one another, whereupon the support elements are arranged to press the beams toward one another and lie in abutment with the item essentially without exerting any pressure against the item where the core is to be glued to the beam frame.

6. A holding device according to Claim 3, **characterized in that** the pivot point (9) is chosen so that the pressure in the first region is roughly 2 - 4 times higher than the pressure in the pressure tank.

7. A method for hardening together an item (3) containing at least a core (5) and a beam frame (7) surrounding the core and including at least two beams (8) whereby the core (5) is glued to the beam frame (7) and the beams (8) of the beam frame (7) are glued to one another, **characterized in that** the unhardened item (3) is arranged on an underlayer (2), that support elements (4; 4a, 4b), are applied around the item to hold it together, that the support elements are caused to exert a differentiated pressure on the item, and that the unhardened item is, on its underlayer (2) and with the supporting elements (4; 4a, 4b), introduced into a pressure tank for hardening.

8. A method according to Claim 7, **characterized in that** the support elements (4; 4a, 4b) are caused to exert a pressure that is elevated relative to the pressure-tank pressure on the surfaces that are pressing the beams toward one another and lie in abutment with the item essentially without pressure on surfaces where the beams are glued to the core.

## Patentansprüche

1. Haltevorrichtung zum Halten eines Gegenstandes (3) in Verbindung mit einem Aushärten des Gegenstandes unter erhöhtem Druck in einem Drucktank, wobei die Haltevorrichtung ein oder mehrere Stützelemente umfasst, welche die lateralen Flächen des Gegenstandes ganz oder teilweise umgeben und zum Stützen des Gegenstandes (3) während des Aushärtens angeordnet sind, **dadurch gekennzeichnet, dass** wenigstens eines der Stützelemente (4a) in Bezug auf den Gegenstand derart angeordnet ist, dass das Stützelement (4a) in einem ersten Bereich entlang seiner Länge gegen den Gegenstand mit einem Druck drückt, der relativ zu dem Drucktankdruck erhöht ist, und in einem zweiten Bereich entlang seiner Länge gegen den Gegenstand mit einem Druck drückt, der relativ zu dem Drucktartkdruck geringer ist.

2. Haltevorrichtung nach Anspruch 1, **dadurch gekennzeichnet, dass** wenigstens eines der Stützelemente (4a) in dem zweiten Bereich anstoßend an den Gegenstand angeordnet ist, ohne im Wesentlichen einen Druck auf den Gegenstand auszuüben.

3. Haltevorrichtung nach Anspruch 1, **dadurch gekennzeichnet, dass** wenigstens eines der Stützelemente (4a) fest in der Haltevorrichtung an einem Schwenkpunkt (9) angeordnet ist.

4. Haltevorrichtung nach Anspruch 1, **dadurch gekennzeichnet; dass** wenigstens eines der Stützelemente (4a), das entlang seiner Länge derart angeordnet ist, dass verschiedene Druckniveaus auf den Gegenstand ausgeübt werden, anstoßend an wenigstens eine der Ecken des Gegenstandes angeordnet ist.

5. Haltevorrichtung nach Anspruch 1, **dadurch gekennzeichnet, dass** diese zum Haften eines Gegenstandes (3) angeordnet ist, der einen Kern (5) und einen Trägerrahmen (7) umfasst, der einen Kern umgibt, und wenigstens zwei Träger (8) aufweist, um den Kern (5) an den Trägerrahmen (7) und um die Träger aneinander zu kleben, woraufhin die Stützelemente derart angeordnet werden, dass die Träger zueinander gedrückt und anstoßend an den Gegenstand angeordnet werden, ohne im Wesentlichen einen Druck auf den Gegenstand dort auszuüben, wo der Kern an den Trägerrahmen geklebt werden soll.

6. Haltevorrichtung nach Anspruch 3, **dadurch gekennzeichnet, dass** der Schwenkpunkt (9) derart gewählt ist, dass der Druck in dem ersten Bereich grob dem Zweibis Vierfachen des Druckes in dem Drucktank entspricht.

7. Verfahren zum Aushärten eines Gegenstandes (3), der wenigstens einen Kern (5) und einen Trägerrahmen (7) umfasst, der den Kern umgibt und wenigstens zwei Träger (8) aufweist, wobei der Kern (5) an den Trägerrahmen (7) und die Träger (8) des Trägerrahmens (7) aneinander geklebt werden, **dadurch gekennzeichnet, dass** der nicht ausgehärtete Gegenstand (3) auf einer Unterschicht (2) angeordnet wird, dass Stützelemente (4; 4a, 4b) um den Gegenstand angeordnet werden, um diesen zusammenzuhalten, dass die Stützelemente dazu gebracht werden, einen unterschiedlichen Druck auf den Gegenstand auszuüben und dass der nicht ausgehärtete Gegenstand auf seiner Unterschicht (2) und mit den Stützelementen (4; 4a, 4b) zum Aushärten in einem Drucktank angeordnet wird.

8. Verfahren nach Anspruch 7, **dadurch gekennzeichnet, dass** die Stützelemente (4; 4a, 4b) dazu gebracht werden, einen gegenüber dem Drucktankdruck erhöhten Druck auf die Flächen auszuüben, welche die Träger zueinander drücken und anstoßend an den Gegenstand angeordnet sind, im Wesentlichen ohne einen Druck auf diejenigen Flächen auszuüben, an denen die Träger an den Kern geklebt werden.

## Revendications

1. Dispositif de retenue d'un article (3) relatif au durcissement de l'article sous une pression élevée dans un réservoir sous pression, dans lequel le dispositif de retenue comprend un ou plusieurs éléments de support qui entourent de façon complète ou partielle les surfaces latérales de l'article et sont agencés pour supporter l'article (3) au cours du durcissement, **caractérisé en ce qu'**au moins un des éléments de support (4a) est agencé par rapport à l'article de façon à ce que l'élément de support (4a) appuie, dans une première région sur sa longueur, contre l'article avec une pression élevée par rapport à la pression du réservoir sous pression et, dans une seconde région sur sa longueur, appuie contre l'article avec une pression inférieure par rapport à la pression du réservoir sous pression.

2. Dispositif de retenue selon la revendication 1, **caractérisé en ce qu'**au moins un des éléments de support (4a) dans la seconde région se trouve en butée avec l'article essentiellement sans exercer de pression sur l'article.

3. Dispositif de retenue selon la revendication 1, **caractérisé en ce qu'**au moins un des éléments de support (4a) est agencé de façon fixe dans le dispositif de retenue au niveau d'un point pivot (9) .

4. Dispositif de retenue selon la revendication 1, **caractérisé en ce qu'**au moins un des éléments de support (4a) qui est agencé sur sa longueur pour exercer différents niveaux de pression contre l'article vient en butée avec au moins un des coins de l'article.

5. Dispositif de retenue selon la revendication 1, **caractérisé en ce qu'**il est agencé pour retenir un article (3) comprenant un noyau (5) et un cadre de profilé (7) entourant un noyau et comprenant au moins deux profilés (8) pour coller le noyau (5) au cadre de profilé (7) et coller les profilés les uns aux autres, après quoi les éléments de support sont agencés pour presser les profilés les uns vers les autres et viennent en butée avec l'article sans exercer de pression contre l'article où le noyau doit être collé au cadre de profilé.

6. Dispositif de retenue selon la revendication 3, **caractérisé en ce que** le point pivot (9) est choisi de sorte que la pression dans la première région soit d'environ 2 à 4 fois supérieure à la pression dans le réservoir sous pression.

7. Méthode pour durcir de façon conjointe un article (3) comprenant au moins un noyau (5) et un cadre de profilé (7) entourant le profilé et comprenant au moins deux profilés (8) moyennant quoi le noyau (5) est collé au cadre de profilé (7) et les profilés (8) du cadre de profilé (7) sont collés les uns aux autres, **caractérisée en ce que** l'article non durci (3) est agencé sur une sous-couche (2), **en ce que** les éléments de support (4 ; 4a, 4b), sont appliqués autour de l'article pour les maintenir, **en ce que** les éléments de support doivent exercer une pression différentielle sur l'article, et **en ce que** l'article non durci est, sur sa sous-couche (2) et avec les éléments de support (4 ; 4a, 4b), introduit dans un réservoir sous pression pour être durci.

8. Méthode selon la revendication 7, **caractérisée en ce que** les éléments de support (4 ; 4a, 4b) doivent exercer une pression élevée par rapport à la pression du réservoir sous pression sur les surfaces qui pressent les profilés les uns vers les autres et viennent en butée avec l'article essentiellement sans pression sur les surfaces où les profilés sont collés au noyau.
